# EUROPEAN PATENT SPECIFICATION

(11) **EP 4 474 992 B1**
(45) Date of publication and mention of the grant of the patent: **22.04.2026**
(21) Application number: 23765692.1
(22) Date of filing: 06.02.2023
(51) Int. Cl.: G06F 9/54, G06F 12/14, G06F 21/53, G06F 12/1009, G06F 9/50, G06F 12/109, B60W 60/00

(54) **PERMISSION MANAGEMENT AND CONTROL METHOD AND APPARATUS FOR SHARED MEMORY**
BERECHTIGUNGSVERWALTUNGS- UND -STEUERUNGSVERFAHREN UND -VORRICHTUNG FÜR GEMEINSAMEN SPEICHER
PROCÉDÉ ET APPAREIL DE GESTION ET DE COMMANDE D'AUTORISATION POUR MÉMOIRE PARTAGÉE

(30) Priority: 08.03.2022 CN 202210228725
(43) Date of publication of application: 11.12.2024
(73) Proprietor: Huawei Technologies Co., Ltd., Shenzhen, Guangdong 518129 (CN)
(72) Inventor: TANG, Bin, Shenzhen, Guangdong 518129 (CN); DING, Tianhong, Shenzhen, Guangdong 518129 (CN); HUANG, Wei, Shenzhen, Guangdong 518129 (CN); GUO, Feng, Shenzhen, Guangdong 518129 (CN)
(74) Representative: Pfenning, Meinig & Partner mbB
(86) International application number: PCT/CN2023/074609
(87) International publication number: WO 2023/169114

(56) References cited:
- CN-A- 110 990 331
- CN-A- 113 467 844
- CN-A- 113 849 428
- JP-A- 2000 066 956
- US-A1- 2008 301 389
- US-A1- 2009 106 434
- US-A1- 2010 235 598
- US-A1- 2018 267 726
- US-A1- 2018 341 428

## Description

### TECHNICAL FIELD

This application relates to the field of computer technologies, and specifically, to a permission management and control method and apparatus for a shared memory.

### BACKGROUND

To share a memory between a plurality of processes, improve efficiency of data transmission, and reduce communication overheads and memory usage, a shared memory technology emerges.

In a conventional shared memory technology, an operating system allocates one shared memory to a plurality of processes, and the plurality of processes may store shared data in the shared memory. Each of the plurality of processes has one virtual memory, and different processes may map a same physical memory address in the shared memory to a virtual memory address in a virtual memory of each process. In this way, the different processes may access, by using the virtual memory address to which the different processes map the physical memory address, shared data stored in the same physical memory address.

However, in the conventional shared memory technology, because a process may set an access permission for the shared memory, a process that should have no access permission can set the access permission, to enable the process to have the permission to access the shared memory. Consequently, a problem that the process that should have no access permission leaks and tampers with the shared data may occur. This reduces security and reliability of the shared data.

US 2010/235598 describes a multi-processor computer system for managing physical memory domains that includes at least one processor having an address interface for sending a memory access message, which includes an address in physical memory and a domain identification (ID). The system also includes a physical memory portioned into a plurality of domains, where each domain includes a plurality of physical addresses. A domain mapping unit (DMU) has an interface to accept the memory access message from the processor. The DMU uses the domain ID to access a permission list, cross-reference the domain ID to a domain including addresses in physical memory, and grant the processor access to the address in response to the address being located in the domain.

US 2008/301389 describes a memory-protection method and apparatus that can protect a memory that is used by components in a real time operating system environment.

### SUMMARY

This application provides a permission management and control method and apparatus for a shared memory, to resolve a problem that security and reliability of shared data are low. The scope of protection of the present invention is set out by the appended claims.

According to a first aspect, this application provides a permission management and control method for a shared memory. The method is applied to a first electronic device. The method includes: reading a management permission list and an access permission list that are pre-burnt in a storage in the first electronic device when the first electronic device is started; configuring, for a management process based on the management permission list, a permission to manage at least one shared memory group; and controlling the management process to group a plurality of service processes into the at least one shared memory group based on the access permission list, where a plurality of service processes in a first shared memory group share a shared memory that is obtained through application based on the first shared memory group, and the first shared memory group is any one of the at least one shared memory group.

Because the plurality of service processes in the first shared memory group share the shared memory that is obtained through application based on the first shared memory group. In other words, the shared memory group is used as a unit for memory sharing. Only a service process that joins the shared memory group has a permission to access the shared memory that is obtained through application based on the shared memory group. In addition, because a process of dividing the plurality of service processes into the at least one shared memory group is performed by the management process, and the management process is a management process that is configured with the permission to manage the at least one shared memory group. In other words, only the management process (that is, a trusted management process) having the management permission can group the plurality of service processes into the at least one shared memory group. In this way, each service process has a permission to access a shared memory that is obtained through application based on a shared memory group to which the service process belongs. Compared with a conventional technology, the service process cannot obtain the permission to access the shared memory through setting the permission by the service process. This avoids emergence of a case that a service process that has no access permission accesses the shared memory, and ensures security and reliability of shared data stored in the shared memory.

In a possible implementation, the access permission list further indicates a type of an access permission of each service process in the plurality of service processes for a shared memory group to which the service process belongs; and the method further includes: controlling the management process to set, based on the type of the access permission of each service process for the shared memory group to which the service process belongs indicated by the access permission list, a type of an access permission of each service process for a shared memory that is obtained through application based on the shared memory group to which the service process belongs.

The type of the access permission of each service process for the shared memory that is obtained through application based on the shared memory group to which the service process belongs is set, so that a specific range in which each service process accesses the shared memory that is obtained through application based on the shared memory group to which the service process belongs is limited and refined. This further ensures the security and the reliability of the shared data. In addition, because a process of setting the type of the access permission of each service process for the shared memory that is obtained through application based on the shared memory group to which the service process belongs is performed by the management process, and the management process has the management permission, the service process cannot set the type of the access permission for the shared memory. This ensures security and reliability of accessing the shared memory, and further ensures the security and the reliability of the shared data.

In a possible implementation, the method further includes: receiving a shared memory application request that is initiated by a first service process and that is based on a second shared memory group, where the first service process is any one of the plurality of service processes, and the second shared memory group is any one of the at least one shared memory group; verifying, based on a type of an access permission of each service process in the second shared memory group for a shared memory that is obtained through application based on the second shared memory group, whether the first service process has a permission to apply for the shared memory based on the second shared memory group; if the first service process has the permission to apply for the shared memory based on the second shared memory group, allocating physical memory space and virtual memory space to the first service process; and copying a mapping relationship between the physical memory space and the virtual memory space into a page table that is of each service process in the second shared memory group and that is obtained based on the second shared memory group.

It is verified whether the first service process has the permission to apply for the shared memory based on the second shared memory group, so that security of memory application can be ensured. In addition, the physical memory space and the virtual memory space are allocated to the first service process, so that allocation of the shared memory is implemented. In addition, the mapping relationship between the physical memory space and the virtual memory space is copied into the page table that is of each service process in the second shared memory group and that is obtained based on the second shared memory group, so that the shared memory is shared between the service processes in the second shared memory group.

In a possible implementation, the method further includes: setting, based on the type of the access permission of each service process in the second shared memory group for the shared memory that is obtained through application based on the second shared memory group, a type of an access permission of each service process in the second shared memory group for the page table that is of the service process and that is obtained based on the second shared memory group.

The type of the access permission of each service process in the second shared memory group for the page table that is of the service process and that is obtained based on the second shared memory group is set, so that a specific range in which each service process in the second shared memory group accesses the shared memory that is obtained through application based on the second shared memory group is limited and refined. This ensures the security and the reliability of the shared data.

In a possible implementation, the reading a management permission list and an access permission list that are pre-burnt in a storage in the first electronic device when the first electronic device is started includes: when the first electronic device is started, reading a configuration data packet and a first signature that are pre-burnt in the storage in the first electronic device, where the configuration data packet includes the management permission list and the access permission list; verifying security of the configuration data packet based on the first signature; and if it is verified that the configuration data packet is secure, obtaining the management permission list and the access permission list from the configuration data packet.

The security of the configuration data packet is verified, so that it may be verified whether the configuration data packet is tampered with. In addition, only after it is verified that the configuration data packet is secure, the management permission list and the access permission list may be obtained from the configuration data packet. This ensures security of the obtained management permission list and the access permission list.

In a possible implementation, the method further includes: in response to an access request that is initiated by the first service process and that is based on the second shared memory group, verifying, based on the type of the access permission of each service process in the second shared memory group for the page table that is of the service process and that is obtained based on the second shared memory group, whether the access request is valid; and if the access request is valid, accessing, based on the access request, a page table that is of the first service process and that is obtained based on the second shared memory group.

After it is verified that the access request is valid, the page table (namely, the shared memory that is obtained through application based on the second shared memory group) that is of the first service process and that is obtained based on the second shared memory group is accessed based on the access request, so that security and reliability of accessing the shared memory is ensured. This further ensures security and reliability of shared data stored in the shared memory.

According to a second aspect, this application provides a permission management and control apparatus for a shared memory. The apparatus is used in a first electronic device, and the apparatus includes: a reading module, configured to: when the first electronic device is started, read a management permission list and an access permission list that are pre-burnt in a storage in the first electronic device; a configuration module, adapted to configure, for a management process based on the management permission list, a permission to manage at least one shared memory group; and a control module, configured to control the management process to group a plurality of service processes into the at least one shared memory group based on the access permission list, where a plurality of service processes in a first shared memory group share a shared memory that is obtained through application based on the first shared memory group, and the first shared memory group is any one of the at least one shared memory group.

In a possible implementation, the access permission list further indicates a type of an access permission of each service process in the plurality of service processes for a shared memory group to which the service process belongs; and the control module is further configured to control the management process to set, based on the type of the access permission of each service process for the shared memory group to which the service process belongs indicated by the access permission list, a type of an access permission of each service process for a shared memory that is obtained through application based on the shared memory group to which the service process belongs.

In a possible implementation, the control module is further configured to: receive a shared memory application request that is initiated by a first service process and that is based on a second shared memory group, where the first service process is any one of the plurality of service processes, and the second shared memory group is any one of the at least one shared memory group; verify, based on a type of an access permission of each service process in the second shared memory group for a shared memory that is obtained through application based on the second shared memory group, whether the first service process has a permission to apply for the shared memory based on the second shared memory group; if the first service process has the permission to apply for the shared memory based on the second shared memory group, allocate physical memory space and virtual memory space to the first service process; and copy a mapping relationship between the physical memory space and the virtual memory space into a page table that is of each service process in the second shared memory group and that is obtained based on the second shared memory group.

In a possible implementation, the control module is further configured to set, based on the type of the access permission of each service process in the second shared memory group for the shared memory that is obtained through application based on the second shared memory group, a type of an access permission of each service process in the second shared memory group for the page table that is of the service process and that is obtained based on the second shared memory group.

In a possible implementation, the reading module is specifically configured to: when the first electronic device is started, read a configuration data packet and a first signature that are pre-burnt in the storage in the first electronic device, where the configuration data packet includes the management permission list and the access permission list; verify security of the configuration data packet based on the first signature; and if it is verified that the configuration data packet is secure, obtain the management permission list and the access permission list from the configuration data packet.

In a possible implementation, the control module is further configured to: in response to an access request that is initiated by the first service process and that is based on the second shared memory group, verify, based on the type of the access permission of each service process in the second shared memory group for the page table that is of the service process and that is obtained based on the second shared memory group, whether the access request is valid; and if the access request is valid, access, based on the access request, a page table that is of the first service process and that is obtained based on the second shared memory group.

According to a third aspect, this application provides a permission management and control apparatus for a shared memory. The apparatus is used in a first electronic device, and the apparatus includes a processor and a transmission interface. The processor is configured to invoke a program stored in a storage to implement the method according to any one of the implementations of the first aspect.

According to a fourth aspect, this application provides a computer-readable storage medium, including a computer program. When the computer program is executed on a processor, the processor is enabled to perform the method according to any one of the implementations of the first aspect.

According to a fifth aspect, this application provides a computer program. When the computer program is executed by a computer or a processor, the computer or the processor is enabled to perform the method according to any one of the implementations of the first aspect.

### BRIEF DESCRIPTION OF DRAWINGS

FIG. 1 is a schematic diagram of a scenario in the autonomous driving field according to this application;
FIG. 2 is a type of an access permission of each service process for shared data according to this application;
FIG. 3 is a schematic diagram of a management process startup sub-procedure according to this application;
FIG. 4 is a schematic diagram of a permission configuration sub-procedure of a shared memory group according to this application;
FIG. 5 is a schematic diagram of a memory application sub-procedure according to this application;
FIG. 6 is a schematic diagram of a memory access sub-procedure according to this application;
FIG. 7 is a schematic diagram of a structure of a permission management and control apparatus for a shared memory according to this application; and
FIG. 8 is a schematic diagram of a structure of an electronic device according to an embodiment of this application.

### DESCRIPTION OF EMBODIMENTS

The following describes technical solutions of this application with reference to accompanying drawings.

The terms "first" and "second" mentioned below are merely intended for a purpose of description, and shall not be understood as an indication or implication of relative importance or an implicit indication of a quantity of indicated technical features. Therefore, a feature limited by "first" or "second" may explicitly or implicitly include one or more features. In descriptions of embodiments of this application, words such as "example" or "for example" are used to represent giving an example, an illustration, or a description. Any embodiment or design solution described as an "example" or "for example" in embodiments of this application should not be explained as being more preferred or having more advantages than another embodiment or design solution. Exactly, use of the words such as "example" or "for example" is intended to present a relative concept in a specific manner.

To resolve the foregoing technical problems, this application provides a permission management and control method for a shared memory. In the method, a permission to manage at least one shared memory group is configured for a management process based on a management permission list, and the management process is controlled to group a plurality of service processes into the at least one shared memory group based on an access permission list. A plurality of service processes in a first shared memory group share a shared memory that is obtained through application based on the first shared memory group, and the first shared memory group is any one of the at least one shared memory group. The management permission list indicates a type of a management permission of the management process for the at least one shared memory group, and the access permission list indicates a shared memory group to which each service process in the plurality of service processes belongs.

Because the plurality of service processes in the first shared memory group share the shared memory that is obtained through application based on the first shared memory group. In other words, the shared memory group is used as a unit for memory sharing. Only a service process that joins the shared memory group has a permission to access the shared memory that is obtained through application based on the shared memory group. In addition, because a process of dividing the plurality of service processes into the at least one shared memory group is performed by the management process, and the management process is a management process that is configured with the permission to manage the at least one shared memory group. In other words, only the management process (that is, a trusted management process) having the management permission can group the plurality of service processes into the at least one shared memory group. In this way, each service process has a permission to access a shared memory that is obtained through application based on a shared memory group to which the service process belongs. Compared with a conventional technology, the service process cannot obtain the permission to access the shared memory through setting the permission by the service process. This avoids emergence of a case that a service process that has no access permission accesses the shared memory, and ensures security and reliability of shared data stored in the shared memory.

The following describes a specific implementation of the permission management and control method for the shared memory.

The permission management and control method for the shared memory relates to two execution bodies, where the two execution bodies are a first electronic device and a second electronic device respectively.

The first electronic device may be an electronic device used in a particular industry. For example, the first electronic device may be an autonomous driving device used in the autonomous driving field. For another example, the first electronic device may alternatively be a production device used in the semiconductor field. A system in the first electronic device may be, for example, an embedded system.

The second electronic device may be a background manufacturing device of the first electronic device.

The permission management and control method for the shared memory may include three main procedures: a data packaging procedure, a system startup procedure, and a service process flow procedure.

The data packaging procedure is performed by the second electronic device. The procedure achieves at least the following three objectives.

A first objective is to determine a type of a management permission of a management process for at least one shared memory group.

A second objective is to determine a shared memory group that needs to be created in an entire system in the first electronic device, and determine a shared memory group to which each service process in a plurality of service processes belongs and a type of an access permission of each service process for the shared memory group to which the service process belongs.

A third objective is to burn data.

The management process and the plurality of service processes are processes in the first electronic device. The management process is a process that has a permission to manage a shared memory group. The management process includes but is not limited to a root process in the first electronic device. A service process is determined based on an industry in which the first electronic device is used. For example, if the industry in which the first electronic device is used in the autonomous driving field, the service process includes but is not limited to a service process related to autonomous driving, such as a sensing process, a fusion process, a positioning process, a planning and control process, and the like.

The second electronic device may achieve the first objective by setting a management permission list. The management permission list indicates the type of the management permission of the management process for the at least one shared memory group. The type of the management permission for the at least one shared memory group includes but is not limited to: creating/deleting a shared memory group, adding a service process to a shared memory group, deleting a service process from a shared memory group, and setting a type of an access permission of each service process for a shared memory that is obtained through application based on a shared memory group to which the service process belongs.

For example, the management permission list may be shown in Table 1.

**Table 1**

| Manager | Type of the management permission | Permission |
|---|---|---|
| Management process | Create/Delete a shared memory group | Access |
| Management process | Add a service process to a shared memory group; delete a service process from a shared memory group; and set a type of an access permission of each service process for a shared memory that is obtained through application based on a shared memory group to which the service process belongs | Access |

It is clear that, the management permission of the management process for the shared memory group is limited by using the management permission list.

The second electronic device may achieve the second objective by setting an access permission list. The access permission list indicates the shared memory group to which each service process in the plurality of service processes belongs, the type of the access permission of each service process for the shared memory group to which the service process belongs, and the shared memory group that needs to be created. A type of an access permission of a service process for a shared memory group to which the service process belongs includes but is not limited to: applying for a shared memory, reading a shared memory, writing a shared memory, and the like.

If the type of the access permission of the service process for the shared memory group to which the service process belongs is applying for the shared memory, the service process can apply for the shared memory based on the shared memory group to which the service process belongs, and has permissions to read and write the shared memory that is obtained through application.

If the type of the access permission of the service process for the shared memory group to which the service process belongs is writing the shared memory, the service process has permissions to read and write the shared memory that is obtained through application based on the shared memory group to which the service process belongs.

If the type of the access permission of the service process for the shared memory group to which the service process belongs is reading the shared memory, the service process has a permission to read the shared memory that is obtained through application based on the shared memory group to which the service process belongs.

It should be noted that a shared memory that is obtained through application based on a shared memory group is a shared memory obtained through application, based on the shared memory group, by the service process that is in the shared memory group and that has a permission to apply for the shared memory.

At least one shared memory group needs to be created. There are a plurality of service processes in each shared memory group. A same service process may belong to at least one shared memory group. When the same service process belongs to a plurality of shared memory groups, types of access permissions of the service process for different shared memory groups to which the service process belongs may be the same or may be different. This is not specifically limited in this application.

For example, the access permission list may be shown in Table 2.

**Table 2**

| Name of a service process | Name of a shared memory group to which the service process belongs | Type of an access permission |
|---|---|---|
| Service process 1 | Shared memory group 1 | Apply for a shared memory |
| Service process 2 | Shared memory group 1 | Read the shared memory |
| Service process 2 | Shared memory group 2 | Apply for a shared memory |
| Service process 3 | Shared memory group 2 | Read the shared memory |

Table 2 shows a shared memory group to which each service process belongs and a type of an access permission of each service process for the shared memory group to which the service process belongs.

It is clear that, the access permission list is set, so that the shared memory group to which each service process belongs, the type of the access permission of each service process for the shared memory group to which the service process belongs, and a quantity of shared memory groups that need to be created may be determined.

A process of constructing the access permission list is described below.

First, a type of an access permission of each service process for shared data may be determined based on an access range of each service process for the shared data. An access range of a service process for shared data includes but is not limited to generating shared data, reading shared data, writing shared data, and prohibiting use of shared data. If the access range of the service process for the shared data is generating the shared data, because the shared data generated by the service process needs to be used by another service process, a type of an access permission of the service process for the shared data is generating the shared data, reading the shared data, and writing the shared data. If the access range of the service process for the shared data is writing the shared data, a type of an access permission of the service process for the shared data is writing the shared data. If the access range of the service process for the shared data is reading the shared data, a type of an access permission of the service process for the shared data is reading the shared data. If the access range of the service process for the shared data is prohibiting use of the shared data, a type of an access permission of the service process for the shared data is having no access permission.

For example, shared data is generally generated by an upstream service process, and used by a downstream service process. If there are a plurality of upstream service processes, another upstream service process may also need to have a permission to read or write the shared data. In addition, some service processes need to be isolated from the shared data to prevent the shared data from being tampered with. In this way, types of access permissions of the upstream and downstream service processes for the shared data may be set based on a feature of interaction between the upstream service process and the downstream service process and access ranges of the service processes for the shared data.

Then, a shared memory group to which each service process belongs and a type of an access permission of each service process for the shared memory group to which each service process belongs are determined based on the type of the access permission of each service process for the shared data.

Specifically, service processes accessing same shared data are grouped into one group, to obtain at least one shared memory group. Each shared memory group corresponds to one type of shared data. Each service process in one shared memory group has an access permission for shared data corresponding to the shared memory group. It should be noted that, because one service process may simultaneously have access permissions for different shared data, a same service process may belong to a plurality of shared memory groups.

A type of an access permission of a service process for a shared memory group to which the service process belongs is set based on a type of an access permission of the service process for shared data corresponding to the shared memory group to which the service process belongs. If the type of the access permission of the service process for the shared data corresponding to the shared memory group to which the service process belongs is generating the shared data, reading the shared data, and writing the shared data, the type of the access permission of the service process for the shared memory group to which the service process belongs is applying for a shared memory. In this way, the service process may apply for the shared memory based on the shared memory group to which the service process belongs, and write the generated shared data into the shared memory obtained through application. If the type of the access permission of the service process for the shared data corresponding to the shared memory group to which the service process belongs is reading the shared data, the type of the access permission of the service process for the shared memory group to which the service process belongs is reading a shared memory. If the type of the access permission of the service process for the shared data corresponding to the shared memory group to which the service process belongs is writing the shared data, the type of the access permission of the service process for the shared memory group to which the service process belongs is writing a shared memory. It should be noted that when the same service process belongs to the plurality of shared memory groups, types of access permissions of the same service process for different shared memory groups may be the same or may be different. This is not specifically limited in this application.

Finally, the access permission list is constructed based on the shared memory group to which each service process belongs and the type of the access permission of each service process for the shared memory group to which the service process belongs.

The following uses the autonomous driving field as an example to describe processes of constructing the access permission list and the management permission list.

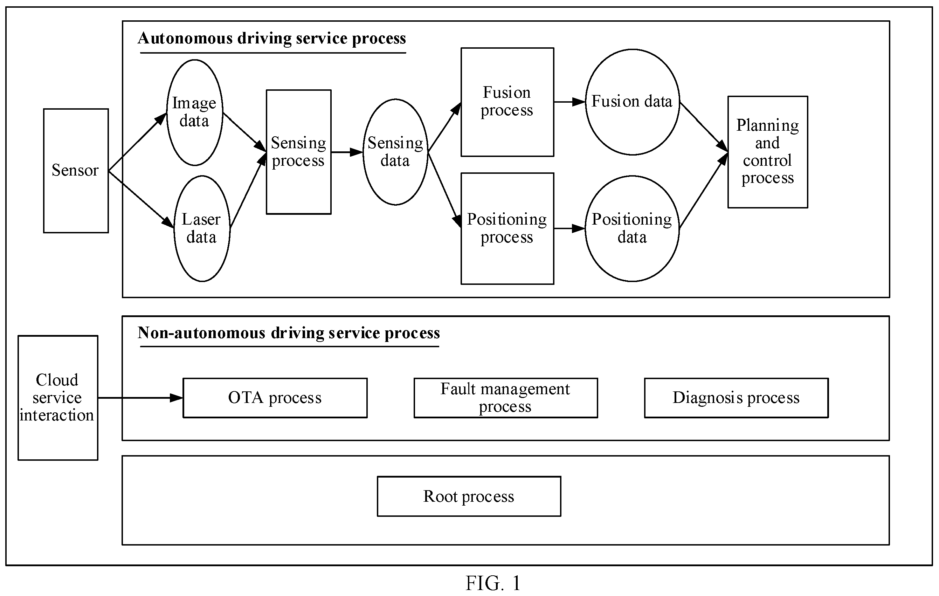

As shown in FIG. 1, the autonomous driving field may generally include an autonomous driving service process, a non-autonomous driving service process, and a root process. The autonomous driving service process includes a sensing process, a fusion process, a positioning process, and a planning and control process. The non-autonomous driving service process may include an OTA (Over-the-Air Technology, over-the-air technology) process, a fault management process, and a diagnosis process.

A data flow of the autonomous driving service process is described below.

A sensor obtains image data and laser data, and sends the image data and the laser data to the sensing process. After processing the image data and the laser data, the sensing process shares obtained sensing data to the fusion process and the positioning process. After processing the sensing data, the fusion process and the positioning process share obtained fusion data and positioning data to the planning and control process.

The non-autonomous driving service process does not participate in an autonomous driving service, but may need to interact with an external system of an autonomous driving system. For example, the OTA process needs to interact with a cloud service.

Based on this, the root process is used as a management process, and a type of a management permission of the root process for at least one shared memory group is set by constructing the management permission list shown in Table 1.

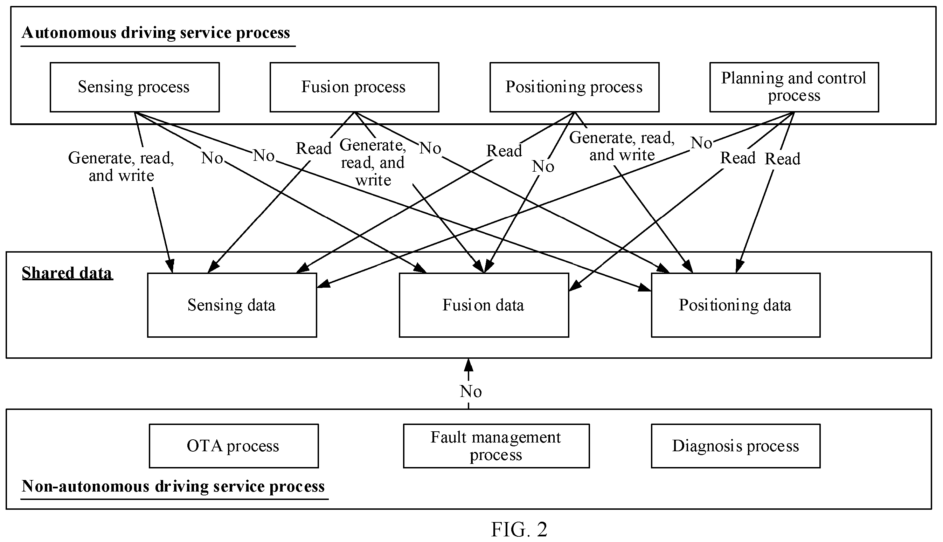

A type of an access permission of each service process for shared data is determined based on an access range of each service process for the shared data. It can be learned from the foregoing that the shared data includes the sensing data, the fusion data, and the positioning data. With reference to the access range (which is determined by the data flow) of each service process for the shared data, the type of the access permission of each service process for the shared data is determined (as shown in FIG. 2). In FIG. 2, allocation of the access permission of each service process for the shared data is shown in Table 3.

**Table 3**

| Name of a process | Function | Type of an access permission for the sensing data | Type of an access permission for the fusion data | Type of an access permission for the positioning data |
|---|---|---|---|---|
| Sensing process | Autonomous driving service process | Generate, read, and write shared data | Have no access permission | Have no access permission |
| Fusion process | Autonomous driving service process | Read the shared data | Generate, read, and write shared data | Have no access permission |
| Positioning process | Autonomous driving service process | Read the shared data | Have no access permission | Generate, read, and write shared data |
| Planning and control process | Autonomous driving service process | Have no access permission | Read the shared data | Read the shared data |
| OTA process | Non-autonomous driving service process | Have no access permission | Have no access permission | Have no access permission |
| Fault management process | Non-autonomous driving service process | Have no access permission | Have no access permission | Have no access permission |
| Diagnosis process | Non-autonomous driving service process | Have no access permission | Have no access permission | Have no access permission |

It should be noted that the non-autonomous driving service process needs to directly communicate with an external service, there is a possibility of an external malicious attack, and the non-autonomous driving service process is a risky process. Consequently, the non-autonomous driving service process is not granted a permission to access the shared data. As shown in Table 3, the non-autonomous driving service process has no permission to access the shared data.

According to Table 3, a shared memory group to which each service process belongs and a type of an access permission of each service process for the shared memory group to which the service process belongs are determined. Specifically, it is shown in an access permission list shown in Table 4.

**Table 4**

| Name of a process | Name of a shared memory group to which the process belongs | Type of an access permission |
|---|---|---|
| Sensing process | Shared memory group 1 (corresponding to the sensing data) | Apply for a shared memory |
| Fusion process | Shared memory group 1 (corresponding to the sensing data) | Read the shared memory |
| Positioning process | Shared memory group 1 (corresponding to the sensing data) | Read the shared memory |
| Fusion process | Shared memory group 2 (corresponding to the fusion data) | Apply for a shared memory |
| Planning and control process | Shared memory group 2 (corresponding to the fusion data) | Read the shared memory |
| Positioning process | Shared memory group 3 (corresponding to the positioning data) | Apply for a shared memory |
| Planning and control process | Shared memory group 3 (corresponding to the positioning data) | Read the shared memory |

It should be noted that, in the shared memory groups shown in Table 4, shared data corresponding to each shared memory group is indicated in brackets following each shared memory group. In a shared memory group, each service process in the shared memory group has a specific access permission for a shared memory that is obtained through application based on the shared memory group, and a type of the specific access permission is determined by a type of an access permission of the service process for the shared memory group to which the service process belongs. Shared data corresponding to a shared memory group is stored in a shared memory that is obtained through application based on the shared memory group. The shared memory that is obtained through application based on the shared memory group is a shared memory obtained through application based on the shared memory group by a service process that is in the shared memory group and that has a permission to apply for the shared memory.

It is clear that, that only a management process that is granted a management permission can manage at least one shared memory group is limited by constructing the management permission list. The management permission list indicates a type of the management permission for the at least one shared memory group, so that a specific management range of the management process for the at least one shared memory group is limited. Therefore, security and reliability of managing the at least one shared memory group are ensured, and security and reliability of the shared data stored in the shared memory is ensured. In addition, the access permission list is constructed, so that the shared memory group to which each service process belongs and the type of the access permission of each service process for the shared memory group to which the service process belongs may be limited. In other words, an access range of each service process for the shared memory that is obtained through application based on the shared memory group to which the service process belongs is specifically limited. This ensures the security and the reliability of the shared data.

After the management permission list and the access permission list are constructed, the second electronic device burns the management permission list and the access permission list into a storage in the first electronic device. In this way, after the first electronic device is started, the first electronic device may obtain the management permission list and the access permission list from the storage in the first electronic device, so that the permission to manage the at least one shared memory group is configured for the management process based on the management permission list, and the management process that is configured with the management permission manages the at least one shared memory group based on the access permission list. In this way, the security and the reliability of the shared data in the shared memory are ensured on a basis of implementing memory sharing.

To ensure security of the management permission list and the access permission list, the second electronic device may further pack the management permission list and the access permission list into a configuration data packet, sign the configuration data packet to obtain a first signature, and burn the configuration data packet and the first signature into the storage in the first electronic device. In this way, after the first electronic device is started, the first electronic device may first verify security of the configuration data packet based on the first signature. If the configuration data packet is secure, the first electronic device obtains the management permission list and the access permission list from the configuration data packet. Because the configuration data packet and the first signature are burnt into the storage in the first electronic device, before the configuration data packet is read, the security of the configuration data packet may be verified based on the first signature. After it is verified that the configuration data packet is secure, the configuration data packet is read. This ensures security and reliability of the management permission list and the access permission list that are obtained from the configuration data packet.

The system startup procedure is performed by the first electronic device. A main objective of the system startup procedure is to configure, for a management process, a permission to manage at least one shared memory group, group a plurality of service processes into the at least one shared memory group, and set a type of an access permission of each service process for a shared memory that is obtained through application based on a shared memory group to which the service process belongs.

The system startup procedure may mainly include two sub-procedures: a management process startup sub-procedure and a permission configuration sub-procedure of a shared memory group.

A procedure of performing the management process startup sub-procedure is shown below.

In a possible implementation, when a first electronic device is started, the first electronic device reads a management permission list and an access permission list that are pre-burnt in a storage in the first electronic device, and configures, for a management process based on the management permission list, a permission to manage at least one shared memory group. The management permission for the at least one shared memory group is configured for the management process, so that the management permission for the at least one shared memory group is granted to a particular management process. This ensures implementation in which only the management process having the granted permission can manage the at least one shared memory group. In this way, security of managing the at least one shared memory group is ensured.

In another possible implementation, when the first electronic device is started, the first electronic device reads a configuration data packet and a first signature that are pre-burnt in the storage in the first electronic device, where the configuration data packet includes the management permission list and the access permission list; verifies security of the configuration data packet based on the first signature; and if it is verified that the configuration data packet is secure, obtains the management permission list and the access permission list from the configuration data packet, and configures, for the management process based on the management permission list, the permission to manage the at least one shared memory group.

It should be noted that, BSBC (BootROM Secure Boot Code, bootrom secure boot code), BootLoader (bootloader), and UEFI (Unified Extensible Firmware Interface, unified extensible firmware interface) are level-by-level verification processes commonly used in the industry. An example in which the BSBC, the BootLoader, and the UEFI are used to perform level-by-level verification is used. The following describes the management process startup sub-procedure.

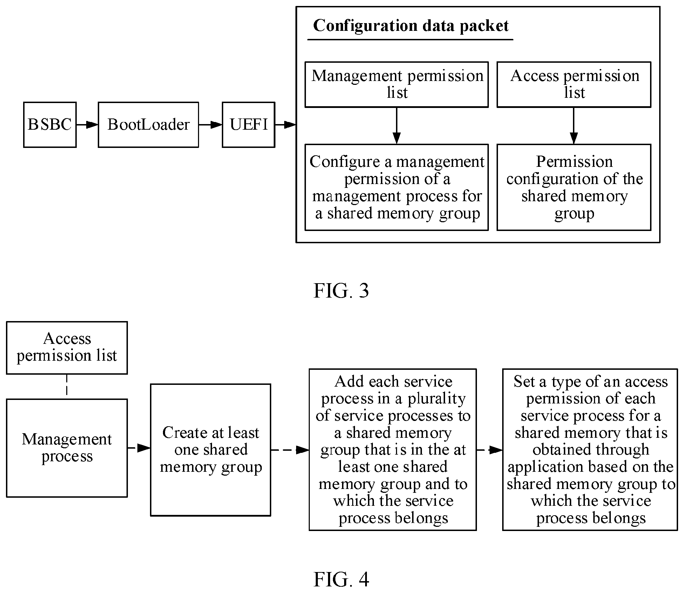

As shown in FIG. 3, a first electronic device first performs level-by-level verification on a configuration data packet by using BSBC, BootLoader, and UEFI. If the level-by-level verification passes, the first electronic device obtains a management permission list and an access permission list from the configuration data packet, and configures, for a management process based on the management permission list, a permission to manage at least one shared memory group.

It should be noted that, the permission to manage the at least one shared memory group is configured for the management process, so that the management process may create/delete a shared memory group, add a service process to a shared memory group, deleting a service process from a shared memory group, set a type of an access permission of each service process for a shared memory that is obtained through application based on a shared memory group to which the service process belongs, and the like.

It should be noted that FIG. 3 further shows the access permission list, and the access permission list is used for permission configuration of the shared memory group.

It is clear that, security of the configuration data packet is verified based on the first signature, so that security of the management permission list and the access permission list in the configuration data packet can be ensured.

A process of performing the permission configuration sub-procedure of the shared memory group is shown below.

First, the first electronic device controls the management process to group a plurality of service processes into the at least one shared memory group based on the access permission list, and then the first electronic device controls management process to set, based on a type of an access permission of each service process for a shared memory group to which the service process belongs indicated by the access permission list, a type of an access permission of each service process for a shared memory that is obtained through application based on the shared memory group to which the service process belongs.

It should be noted that the plurality of service processes in the shared memory group share the shared memory that is obtained through application based on the shared memory group.

It should be noted that the type of the access permission of each service process for the shared memory that is obtained through application based on the shared memory group to which the service process belongs is the type of the access permission of each service process for the shared memory group to which the service process belongs.

The following uses FIG. 4 as an example to describe in detail a permission configuration sub-procedure of a shared memory group. A detailed process is described below.

A first electronic device controls a management process to create at least one shared memory group based on an access permission list; add, based on a shared memory group to which each service process in a plurality of service processes belongs indicated by the access permission list, each service process in the plurality service processes to the shared memory group that is in the at least one shared memory group and to which the service process belongs; and set, based on a type of an access permission of each service process for the shared memory group to which the service process belongs indicated by the access permission list, a type of an access permission of each service process for a shared memory that is obtained through application based on the shared memory group to which the service process belongs.

It is clear that, because the plurality of service processes in the shared memory group share the shared memory that is obtained through application based on the shared memory group. In other words, the shared memory group is used as a unit for memory sharing. Only a service process that joins the shared memory group has a permission to access the shared memory that is obtained through application based on the shared memory group. In addition, because a process of dividing the plurality of service processes into the at least one shared memory group is performed by the management process, and the management process is a management process that is configured with a permission to manage the at least one shared memory group. In other words, only the management process (that is, a trusted management process) having the management permission can group the plurality of service processes into the at least one shared memory group. In this way, each service process has a permission to access the shared memory that is obtained through application based on the shared memory group to which the service process belongs. Compared with a conventional technology, the service process cannot obtain the permission to access the shared memory through setting the permission by the service process. This avoids emergence of a case that a service process that has no access permission accesses the shared memory, and ensures security and reliability of shared data stored in the shared memory. In addition, the type of the access permission of each service process for the shared memory that is obtained through application based on the shared memory group to which the service process belongs is set, so that a specific range in which each service process accesses the shared memory that is obtained through application based on the shared memory group to which the service process belongs is limited and refined. This further ensures the security and the reliability of the shared data. In addition, because a process of setting the type of the access permission of each service process for the shared memory that is obtained through application based on the shared memory group to which the service process belongs is performed by the management process, and the management process has the management permission, the service process cannot set the type of the access permission for the shared memory. This ensures security and reliability of accessing the shared memory, and further ensures the security and the reliability of the shared data.

The service process flow procedure is performed by the first electronic device. The service process flow procedure may mainly include two sub-procedures: a memory application sub-procedure and a memory access sub-procedure.

A main objective of the memory application sub-procedure is to: apply, for a service process that is in a shared memory group and that has a permission to apply for a shared memory, for the shared memory based on the shared memory group; share the shared memory obtained through application with each service process in the shared memory group; and set a type of an access permission of each service process in the shared memory group for the shared memory obtained through application.

The following uses a second shared memory group and a first service process as an example to describe the memory application sub-procedure. It should be noted that the second shared memory group is any one of at least one shared memory group, and the first service process is any one of a plurality of service processes in the first electronic device.

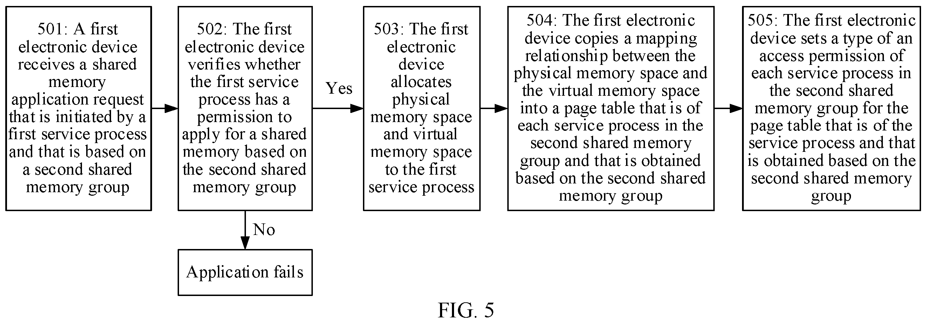

As shown in FIG. 5, a process of a memory application sub-procedure is shown below.

501: A first electronic device receives a shared memory application request that is initiated by a first service process and that is based on a second shared memory group.

502: The first electronic device verifies whether the first service process has a permission to apply for a shared memory based on the second shared memory group. If the first service process has no permission to apply for the shared memory based on the second shared memory group, the application for the shared memory fails. If the first service process has the permission to apply for the shared memory based on the second shared memory group, step 503 is performed.

A verification procedure is shown below.

Based on a type of an access permission of each service process in the second shared memory group for the shared memory that is obtained through application based on the second shared memory group, the first electronic device verifies whether the first service process has the permission to apply for the shared memory based on the second shared memory group.

Specifically, if the second shared memory group has the first service process, and a type of an access permission of the first service process for the shared memory that is obtained through application based on the second shared memory group is applying for the shared memory, the first service process has the permission to apply for the shared memory based on the second shared memory group.

If the second shared memory group does not have the first service process, or a type of an access permission of the first service process for the shared memory that is obtained through application based on the second shared memory group is not applying for the shared memory, the first service process has no permission to apply for the shared memory based on the second shared memory group.

It is verified whether the first service process has the permission to apply for the shared memory based on the second shared memory group, so that security of memory application can be ensured.

503: The first electronic device allocates physical memory space and virtual memory space to the first service process, in other words, allocates the shared memory based on the second shared memory group to the first service process. The physical memory space and the virtual memory space are allocated to the first service process, so that allocation of the shared memory is implemented.

504: The first electronic device copies a mapping relationship between the physical memory space and the virtual memory space into a page table that is of each service process in the second shared memory group and that is obtained based on the second shared memory group.

It should be noted that the mapping relationship between the physical memory space and the virtual memory space is a mapping relationship between a physical memory address in the physical memory space and a virtual memory address in the virtual memory space.

The mapping relationship between the physical memory space and the virtual memory space is copied into the page table that is of each service process in the second shared memory group and that is obtained based on the second shared memory group, so that the shared memory is shared between the service processes in the second shared memory group. In addition, because the same mapping relationship is copied into the page table that is of each service process in the second shared memory group and that is obtained based on the second shared memory group, different service processes may access, by using a same virtual memory address, shared data stored in a same physical memory address.

505: The first electronic device sets a type of an access permission of each service process in the second shared memory group for the page table that is of the service process and that is obtained based on the second shared memory group.

Specifically, the type of the access permission of each service process in the second shared memory group for the shared memory that is obtained through application based on the second shared memory group is set to the type of the access permission of each service process in the second shared memory group for the page table that is of the service process and that is obtained based on the second shared memory group.

It should be noted that, when a service process belongs to a plurality of shared memory groups, the service process has a plurality of page tables, and the plurality of page tables are in one-to-one correspondence with the plurality of shared memory groups to which the service process belongs.

The type of the access permission of each service process in the second shared memory group for the page table that is of the service process and that is obtained based on the second shared memory group is set, so that a specific range in which each service process in the second shared memory group accesses the shared memory that is obtained through application based on the second shared memory group is limited and refined. This ensures the.

The following uses a second shared memory group and a first service process as an example to describe a memory access sub-procedure. The second shared memory group and the first service process are described above. Details are not described herein again.

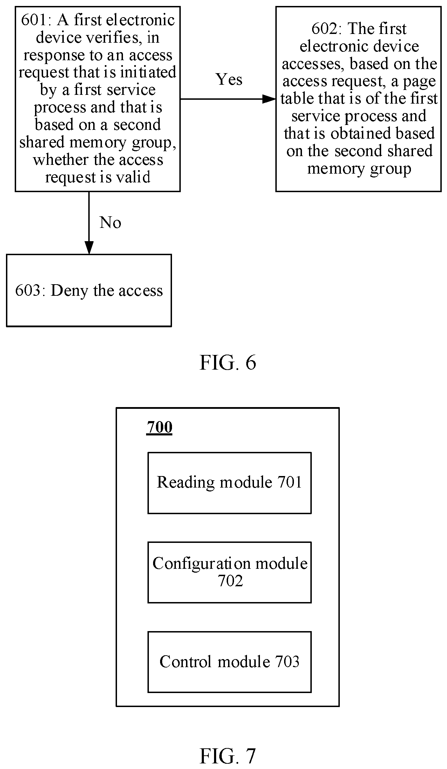

As shown in FIG. 6, a procedure of performing a memory access sub-procedure is described below.

601: A first electronic device verifies, in response to an access request that is initiated by a first service process and that is based on a second shared memory group, whether the access request is valid.

For example, a verification process is: verifying, based on a type of an access permission of each service process in the second shared memory group for a page table that is of the service process and that is obtained based on the second shared memory group, whether the access request is valid.

Specifically, if the second shared memory group includes the first service process, and a type of an access permission of the first service process for a page table that is of the first service process and that is obtained based on the second shared memory group matches a type of the access request, it is determined that the access request is valid.

If the second shared memory group does not include the first service process, or a type of an access permission of first service process for a page table that is of the first service process and that is obtained based on the second shared memory group does not match a type of the access request, it is determined that the access request is invalid.

For example, on a premise that the access request is writing a shared memory, if the type of the access permission of the first service process for the page table that is of the first service process and that is obtained based on the second shared memory group is applying for the shared memory or writing the shared memory, it is determined that the access request is valid. If the second shared memory group does not include the first service process, or the access permission of the first service process for the page table that is of the first service process and that is obtained based on the second shared memory group is reading the shared memory, it is determined that the access request is invalid.

602: If the access request is valid, the first electronic device accesses, based on the access request, the page table that is of the first service process and that is obtained based on the second shared memory group.

603: If the access request is invalid, the access is denied.

It is clear that, after it is verified that the access request is valid, the page table (namely, a shared memory that is obtained through application based on the second shared memory group) that is of the first service process and that is obtained based on the second shared memory group is accessed based on the access request, so that security and reliability of accessing the shared memory is ensured. This further ensures security and reliability of shared data stored in the shared memory.

This application further provides a permission management and control apparatus for a shared memory. This apparatus is used in a first electronic device. As shown in FIG. 7, the apparatus 700 may include: a reading module 701, configured to: when the first electronic device is started, read a management permission list and an access permission list that are pre-burnt in a storage in the first electronic device; a configuration module 702, adapted to configure, for a management process based on the management permission list, a permission to manage at least one shared memory group; and a control module 703, configured to control the management process to group a plurality of service processes into the at least one shared memory group based on the access permission list, where a plurality of service processes in a first shared memory group share a shared memory that is obtained through application based on the first shared memory group, and the first shared memory group is any one of the at least one shared memory group.

In a possible implementation, the access permission list further indicates a type of an access permission of each service process in the plurality of service processes for a shared memory group to which the service process belongs; and the control module 703 is further configured to control the management process to set, based on the type of the access permission of each service process for the shared memory group to which the service process belongs indicated by the access permission list, a type of an access permission of each service process for a shared memory that is obtained through application based on the shared memory group to which the service process belongs.

In a possible implementation, the control module 703 is further configured to: receive a shared memory application request that is initiated by a first service process and that is based on a second shared memory group, where the first service process is any one of the plurality of service processes, and the second shared memory group is any one of the at least one shared memory group; verify, based on a type of an access permission of each service process in the second shared memory group for a shared memory that is obtained through application based on the second shared memory group, whether the first service process has a permission to apply for the shared memory based on the second shared memory group; if the first service process has the permission to apply for the shared memory, allocate physical memory space and virtual memory space to the first service process; and copy a mapping relationship between the physical memory space and the virtual memory space into a page table that is of each service process in the second shared memory group and that is obtained based on the second shared memory group.

In a possible implementation, the control module 703 is further configured to set, based on the type of the access permission of each service process in the second shared memory group for the shared memory that is obtained through application based on the second shared memory group, a type of an access permission of each service process in the second shared memory group for the page table that is of the service process and that is obtained based on the second shared memory group.

In a possible implementation, the reading module 701 is specifically configured to: when the first electronic device is started, read a configuration data packet and a first signature that are pre-burnt in the storage in the first electronic device, where the configuration data packet includes the management permission list and the access permission list; verify security of the configuration data packet based on the first signature; and if it is verified that the configuration data packet is secure, obtain the management permission list and the access permission list from the configuration data packet.

In a possible implementation, the control module 703 is further configured to: in response to an access request that is initiated by the first service process and that is based on the second shared memory group, verify, based on the type of the access permission of each service process in the second shared memory group for the page table that is of the service process and that is obtained based on the second shared memory group, whether the access request is valid; and if the access request is valid, access, based on the access request, a page table that is of the first service process and that is obtained based on the second shared memory group.

This application further provides a permission management and control apparatus for a shared memory. The apparatus is used in a first electronic device, and the apparatus includes a processor and a transmission interface. The processor is configured to invoke a program stored in a storage to implement the foregoing method embodiments.

Implementation principles and technical effects of the foregoing apparatus in this application is described above. Details are not described herein again.

This application further provides a computer-readable storage medium. The computer storage medium stores a computer program. When the computer program is executed on a processor, the processor is enabled to perform the technical solution in any one of the foregoing method embodiments.

This application further provides a computer program product. When a computer program is executed by a computer, the computer is enabled to perform the technical solution in any one of the foregoing method embodiments.

This application further provides an electronic device, including the technical solution in any one of the foregoing apparatus embodiments.

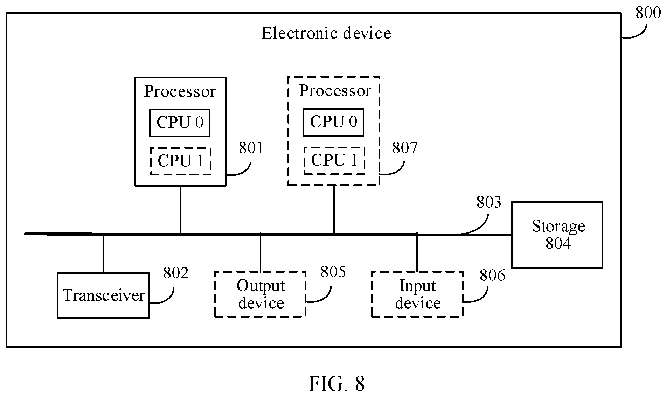

This application further provides an electronic device. As shown in FIG. 8, the electronic device 800 includes a processor 801, a transceiver 802, and a communication line 803.

The processor 801 is configured to perform any step in the method embodiment shown in FIG. 3, FIG. 4, FIG. 5, or FIG. 6.

Further, the electronic device 800 may also include a storage 804. The processor 801, the storage 804, and the transceiver 802 may be connected through the communication line 803.

The processor 801 is a CPU (central processing unit, central processing unit), a general-purpose processor, a network processor (network processor, NP), a digital signal processor (digital signal processor, DSP), a microprocessor, a microcontroller, a programmable logic device (programmable logic device, PLD), or any combination thereof. The processor 801 may alternatively be another apparatus having a processing function, for example, a circuit, a component, or a software module. This is not limited.

The transceiver 802 is configured to communicate with another device or another communication network. The another communication network may be Ethernet, a radio access network (radio access network, RAN), a wireless local area network (wireless local area network, WLAN), or the like. The transceiver 802 may be a module, a circuit, a transceiver, or any apparatus that can implement communication.

The transceiver 802 is mainly configured to receive and send bit streams. The transceiver 802 may include a transmitter and a receiver, to respectively send and receive the bit streams. Operations other than receiving and sending of the bit streams are implemented by the processor, for example, information processing and calculation.

The communication line 803 is configured to perform information transmission between parts included in the electronic device 800.

In a design, the processor may be considered as a logic circuit, and the transceiver may be considered as an interface circuit.

The storage 804 is configured to store instructions. The instructions may be a computer program.

The storage 804 may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). The storage 804 may alternatively be a compact disc read-only memory (compact disc read-only memory, CD-ROM) or another compact disc storage, an optical disc storage (including a compact disc, a laser disc, an optical disc, a digital versatile disc, a Blu-ray disc, and the like), a magnetic disk storage medium, another magnetic storage device, or the like. It should be noted that the storage in the systems and methods described in this specification is intended to include but not limited to these and any storage in another proper type.

It should be noted that the storage 804 may exist independently of the processor 801, or may be integrated with the processor 801. The storage 804 may be configured to store the instructions, program code, some data, or the like. The storage 804 may be located inside the electronic device 800, or may be located outside the electronic device 800. This is not limited. The processor 801 is configured to execute the instructions stored in the storage 804 to perform the method provided in the foregoing embodiments of this application.

In an example, the processor 801 may include one or more CPUs, for example, a CPU 0 and a CPU 1 in FIG. 8.

Optionally, the electronic device 800 includes a plurality of processors. For example, in addition to the processor 801 in FIG. 8, the electronic device 800 may further include a processor 807.

Optionally, the electronic device 800 further includes an output device 805 and an input device 806. The input device 806 is a device such as a keyboard, a mouse, a microphone, or a joystick, and the output device 805 is a device such as a display screen or a speaker (speaker).

The electronic device 800 may be a chip system or a device having a structure similar to that in FIG. 8. The chip system may include a chip, or may include a chip and another discrete component. Actions, terms, and the like in embodiments of this application may be mutually referenced. This is not limited. In embodiments of this application, names of messages exchanged between devices, names of parameters in the messages, or the like are merely examples. During specific implementation, other names may alternatively be used. This is not limited. In addition, a composition structure shown in FIG. 8 does not constitute a limitation on the electronic device 800. In addition to the parts shown in FIG. 8, the electronic device 800 may include more or fewer parts than those shown in FIG. 8, or combine some parts, or have different part arrangements.

The processor and the transceiver that are described in this application may be implemented on an integrated circuit (integrated circuit, IC), an analog IC, a radio frequency integrated circuit, a hybrid signal IC, an application-specific integrated circuit (application-specific integrated circuit, ASIC), a printed circuit board (printed circuit board, PCB), an electronic device, or the like. The processor and the transceiver may alternatively be produced by using various IC process technologies, for example, a complementary metal oxide semiconductor (complementary metal oxide semiconductor, CMOS), an N-type metal oxide semiconductor (nMetal-oxide-semiconductor, NMOS), a P-type metal oxide semiconductor (positive channel metal oxide semiconductor, PMOS), a bipolar junction transistor (Bipolar Junction Transistor, BJT), a bipolar CMOS (BiCMOS), silicon germanium (SiGe), and gallium arsenide (GaAs).

A person of ordinary skill in the art may be aware that, in combination with the examples described in embodiments disclosed in this specification, units and algorithm steps may be implemented by using electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, in other words, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be embodied in a form of a software product. The computer software product is stored in a storage medium, and includes several instructions to enable a computer device (which may be a personal computer, a server, a network device, or the like) to perform all or some of the steps of the methods described in embodiments of this application. The foregoing storage medium includes various media that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Therefore, the protection scope of this application shall be subject to the protection scope of the claims.

## Claims

1. A permission management and control method for a shared memory, wherein the method is applied to a first electronic device, and the method comprises:
reading a management permission list and an access permission list that are pre-burnt in a storage in the first electronic device when the first electronic device is started;
configuring, for a management process based on the management permission list, a permission to manage at least one shared memory group; and
controlling the management process to group a plurality of service processes into the at least one shared memory group based on the access permission list, wherein
a plurality of service processes in a first shared memory group share a shared memory that is obtained through application based on the first shared memory group, and the first shared memory group is any one of the at least one shared memory group.

2. The method according to claim 1, wherein the access permission list further indicates a type of an access permission of each service process in the plurality of service processes for a shared memory group to which the service process belongs; and
the method further comprises:
controlling the management process to set, based on the type of the access permission of each service process for the shared memory group to which the service process belongs indicated by the access permission list, a type of an access permission of each service process for a shared memory that is obtained through application based on the shared memory group to which the service process belongs.

3. The method according to claim 2, wherein the method further comprises:
receiving a shared memory application request that is initiated by a first service process and that is based on a second shared memory group, wherein the first service process is any one of the plurality of service processes, and the second shared memory group is any one of the at least one shared memory group;
verifying, based on a type of an access permission of each service process in the second shared memory group for a shared memory that is obtained through application based on the second shared memory group, whether the first service process has a permission to apply for the shared memory based on the second shared memory group;
if the first service process has the permission to apply for the shared memory based on the second shared memory group, allocating physical memory space and virtual memory space to the first service process; and
copying a mapping relationship between the physical memory space and the virtual memory space into a page table that is of each service process in the second shared memory group and that is obtained based on the second shared memory group.

4. The method according to claim 3, wherein the method further comprises:
setting, based on the type of the access permission of each service process in the second shared memory group for the shared memory that is obtained through application based on the second shared memory group, a type of an access permission of each service process in the second shared memory group for the page table that is of the service process and that is obtained based on the second shared memory group.

5. The method according to any one of claims 1 to 4, wherein the reading a management permission list and an access permission list that are pre-burnt in a storage in the first electronic device when the first electronic device is started comprises:
when the first electronic device is started, reading a configuration data packet and a first signature that are pre-burnt in the storage in the first electronic device, wherein the configuration data packet comprises the management permission list and the access permission list;
verifying security of the configuration data packet based on the first signature; and
if it is verified that the configuration data packet is secure, obtaining the management permission list and the access permission list from the configuration data packet.

6. The method according to claim 4, wherein the method further comprises:
in response to an access request that is initiated by the first service process and that is based on the second shared memory group, verifying, based on the type of the access permission of each service process in the second shared memory group for the page table that is of the service process and that is obtained based on the second shared memory group, whether the access request is valid; and
if the access request is valid, accessing, based on the access request, a page table that is of the first service process and that is obtained based on the second shared memory group.

7. A permission management and control apparatus (700) for a shared memory, wherein the apparatus is used in a first electronic device, and the apparatus comprises:
a reading module (701), configured to: when the first electronic device is started, read a management permission list and an access permission list that are pre-burnt in a storage in the first electronic device;
a configuration module (702), adapted to configure, for a management process based on the management permission list, a permission to manage at least one shared memory group; and
a control module (703), configured to control the management process to group a plurality of service processes into the at least one shared memory group based on the access permission list, wherein
a plurality of service processes in a first shared memory group share a shared memory that is obtained through application based on the first shared memory group, and the first shared memory group is any one of the at least one shared memory group.

8. The apparatus (700) according to claim 7, wherein the access permission list further indicates a type of an access permission of each service process in the plurality of service processes for a shared memory group to which the service process belongs; and
the control module (703) is further configured to control the management process to set, based on the type the access permission of each service process for the shared memory group to which the service process belongs indicated by the access permission list, a type of an access permission of each service process for a shared memory that is obtained through application based on the shared memory group to which the service process belongs.

9. The apparatus (700) according to claim 8, wherein the control module (703) is further configured to: receive a shared memory application request that is initiated by a first service process and that is based on a second shared memory group, wherein the first service process is any one of the plurality of service processes, and the second shared memory group is any one of the at least one shared memory group; verify, based on a type of an access permission of each service process in the second shared memory group for a shared memory that is obtained through application based on the second shared memory group, whether the first service process has a permission to apply for the shared memory based on the second shared memory group; if the first service process has the permission to apply for the shared memory based on the second shared memory group, allocate physical memory space and virtual memory space to the first service process; and copy a mapping relationship between the physical memory space and the virtual memory space into a page table that is of each service process in the second shared memory group and that is obtained based on the second shared memory group.

10. The apparatus (700) according to claim 9, wherein the control module (703) is further configured to set, based on the type of the access permission of each service process in the second shared memory group for the shared memory that is obtained through application based on the second shared memory group, a type of an access permission of each service process in the second shared memory group for the page table that is of the service process and that is obtained based on the second shared memory group.

11. The apparatus (700) according to any one of claims 7 to 10, wherein the reading module (701) is specifically configured to: when the first electronic device is started, read a configuration data packet and a first signature that are pre-burnt in the storage in the first electronic device, wherein the configuration data packet comprises the management permission list and the access permission list; verify security of the configuration data packet based on the first signature; and if it is verified that the configuration data packet is secure, obtain the management permission list and the access permission list from the configuration data packet.

12. The apparatus (700) according to claim 10, wherein the control module (703) is further configured to: in response to an access request that is initiated by the first service process and that is based on the second shared memory group, verify, based on the type of the access permission of each service process in the second shared memory group for the page table that is of the service process and that is obtained based on the second shared memory group, whether the access request is valid; and if the access request is valid, access, based on the access request, a page table that is of the first service process and that is obtained based on the second shared memory group.

13. A computer-readable storage medium, comprising a computer program, wherein when the computer program is executed on a processor, the processor is enabled to perform the method according to any one of claims 1 to 6.

14. A computer program, wherein when the computer program is executed by a computer or a processor, the computer or the processor is enabled to perform the method according to any one of claims 1 to 6.

## Patentansprüche

1. Berechtigungsverwaltungs- und -steuerungsverfahren für einen gemeinsamen Speicher, wobei das Verfahren auf eine erste elektronische Einrichtung angewendet wird und das Verfahren Folgendes umfasst:
Lesen einer Verwaltungsberechtigungsliste und einer Zugriffsberechtigungsliste, die in einer Speichereinrichtung in der ersten elektronischen Einrichtung vorab gespeichert sind, wenn die erste elektronische Einrichtung gestartet wird;
Konfigurieren, für einen Verwaltungsprozess basierend auf der Verwaltungsberechtigungsliste, einer Berechtigung zum Verwalten mindestens einer gemeinsamen Speichergruppe; und
Steuern des Verwaltungsprozesses, um eine Vielzahl von Dienstprozessen in der mindestens einen gemeinsamen Speichergruppe basierend auf der Zugriffsberechtigungsliste zu gruppieren, wobei
eine Vielzahl von Dienstprozessen in einer ersten gemeinsamen Speichergruppe einen gemeinsamen Speicher, der mittels Beanspruchung basierend auf der ersten gemeinsamen Speichergruppe erlangt wird, gemeinsam nutzt und die erste gemeinsame Speichergruppe eine aus der mindestens einen gemeinsamen Speichergruppe ist.

2. Verfahren nach Anspruch 1, wobei die Zugriffsberechtigungsliste ferner einen Typ einer Zugriffsberechtigung eines jeden Dienstprozesses in der Vielzahl von Dienstprozessen für eine gemeinsame Speichergruppe angibt, zu der der Dienstprozess gehört; und
das Verfahren ferner Folgendes umfasst:
Steuern des Verwaltungsprozesses, um basierend auf dem Typ der Zugriffsberechtigung eines jeden Dienstprozesses für die gemeinsame Speichergruppe, zu der der Dienstprozess gehört, der durch die Zugriffsberechtigungsliste angegeben ist, einen Typ einer Zugriffsberechtigung eines jeden Dienstprozesses für einen gemeinsamen Speicher, der mittels Beanspruchung basierend auf der gemeinsamen Speichergruppe, zu der der Dienstprozess gehört, erlangt wird, einzustellen.

3. Verfahren nach Anspruch 2, wobei das Verfahren ferner Folgendes umfasst:
Empfangen einer Anfrage zur Beanspruchung eines gemeinsamen Speichers, die durch einen ersten Dienstprozess initiiert wird und die auf einer zweiten gemeinsamen Speichergruppe basiert, wobei der erste Dienstprozess ein beliebiger aus der Vielzahl von Dienstprozessen ist und die zweite gemeinsame Speichergruppe eine beliebige aus der mindestens einen gemeinsamen Speichergruppe ist;
Überprüfen, basierend auf einem Typ einer Zugriffsberechtigung eines jeden Dienstprozesses in der zweiten gemeinsamen Speichergruppe für einen gemeinsamen Speicher, der mittels Beanspruchung basierend auf der zweiten gemeinsamen Speichergruppe erlangt wird, ob der erste Dienstprozess eine Berechtigung hat, den gemeinsamen Speicher basierend auf der zweiten gemeinsamen Speichergruppe zu beanspruchen;
wenn der erste Dienstprozess die Berechtigung hat, den gemeinsamen Speicher basierend auf der zweiten gemeinsamen Speichergruppe zu beanspruchen, Zuweisen von physischem Speicherplatz und virtuellem Speicherplatz an den ersten Dienstprozess; und
Kopieren einer Zuordnungsbeziehung zwischen dem physischen Speicherplatz und dem virtuellen Speicherplatz in eine Seitentabelle, die zu jedem Dienstprozess in der zweiten gemeinsamen Speichergruppe gehört und die basierend auf der zweiten gemeinsamen Speichergruppe erlangt wird.

4. Verfahren nach Anspruch 3, wobei das Verfahren ferner Folgendes umfasst:
Einstellen, basierend auf dem Typ der Zugriffsberechtigung eines jeden Dienstprozesses in der zweiten gemeinsamen Speichergruppe für den gemeinsamen Speicher, der mittels Beanspruchung basierend auf der zweiten gemeinsamen Speichergruppe erlangt wird, eines Typs einer Zugriffsberechtigung eines jeden Dienstprozesses in der zweiten gemeinsamen Speichergruppe für die Seitentabelle, die zu dem Dienstprozess gehört und die basierend auf der zweiten gemeinsamen Speichergruppe erlangt wird.

5. Verfahren nach einem der Ansprüche 1 bis 4, wobei das Lesen einer Verwaltungsberechtigungsliste und einer Zugriffsberechtigungsliste, die in einer Speichereinrichtung in der ersten elektronischen Einrichtung vorab gespeichert sind, wenn die erste elektronische Einrichtung gestartet wird, Folgendes umfasst:
wenn die erste elektronische Einrichtung gestartet wird, Lesen eines Konfigurationsdatenpakets und einer ersten Signatur, die in der Speichereinrichtung in der ersten elektronischen Einrichtung vorab gespeichert sind, wobei das Konfigurationsdatenpaket die Verwaltungsberechtigungsliste und die Zugriffsberechtigungsliste umfasst;
Überprüfen der Sicherheit des Konfigurationsdatenpakets basierend auf der ersten Signatur; und
wenn überprüft wurde, dass das Konfigurationsdatenpaket sicher ist, Erlangen der Verwaltungsberechtigungsliste und der Zugriffsberechtigungsliste von dem Konfigurationsdatenpaket.

6. Verfahren nach Anspruch 4, wobei das Verfahren ferner Folgendes umfasst:
als Reaktion auf eine Zugriffsanfrage, die durch den ersten Dienstprozess initiiert wird und die auf der zweiten gemeinsamen Speichergruppe basiert, Überprüfen, basierend auf dem Typ der Zugriffsberechtigung eines jeden Dienstprozesses in der zweiten gemeinsamen Speichergruppe für die Seitentabelle, die zu dem Dienstprozess gehört und die basierend auf der zweiten gemeinsamen Speichergruppe erlangt wird, ob die Zugriffsanfrage gültig ist; und
wenn die Zugriffsanfrage gültig ist, Zugreifen, basierend auf der Zugriffsanfrage, auf eine Seitentabelle, die zu dem ersten Dienstprozess gehört und die basierend auf der zweiten gemeinsamen Speichergruppe erlangt wird.

7. Berechtigungsverwaltungs- und -steuerungsvorrichtung (700) für einen gemeinsamen Speicher, wobei die Vorrichtung in einer ersten elektronischen Einrichtung verwendet wird und die Vorrichtung Folgendes umfasst:
ein Lesemodul (701), das zu Folgendem konfiguriert ist: wenn die erste elektronische Einrichtung gestartet wird, Lesen einer Verwaltungsberechtigungsliste und einer Zugriffsberechtigungsliste, die in einer Speichereinrichtung in der ersten elektronischen Einrichtung vorab gespeichert sind;
ein Konfigurationsmodul (702), das dazu angepasst ist, für einen Verwaltungsprozess basierend auf der Verwaltungsberechtigungsliste eine Berechtigung zum Verwalten mindestens einer gemeinsamen Speichergruppe zu konfigurieren; und
ein Steuerungsmodul (703), das dazu konfiguriert ist, den Verwaltungsprozess zu steuern, um eine Vielzahl von Dienstprozessen in der mindestens einen gemeinsamen Speichergruppe basierend auf der Zugriffsberechtigungsliste zu gruppieren, wobei
eine Vielzahl von Dienstprozessen in einer ersten gemeinsamen Speichergruppe einen gemeinsamen Speicher, der mittels Beanspruchung basierend auf der ersten gemeinsamen Speichergruppe erlangt wird, gemeinsam nutzt und die erste gemeinsame Speichergruppe eine aus der mindestens einen gemeinsamen Speichergruppe ist.

8. Vorrichtung (700) nach Anspruch 7, wobei die Zugriffsberechtigungsliste ferner einen Typ einer Zugriffsberechtigung eines jeden Dienstprozesses in der Vielzahl von Dienstprozessen für eine gemeinsame Speichergruppe angibt, zu der der Dienstprozess gehört; und
das Steuerungsmodul (703) ferner dazu konfiguriert ist, den Verwaltungsprozess zu steuern, um basierend auf dem Typ der Zugriffsberechtigung eines jeden Dienstprozesses für die gemeinsame Speichergruppe, zu der der Dienstprozess gehört, der durch die Zugriffsberechtigungsliste angegeben ist, einen Typ einer Zugriffsberechtigung eines jeden Dienstprozesses für einen gemeinsamen Speicher, der mittels Beanspruchung basierend auf der gemeinsamen Speichergruppe, zu der der Dienstprozess gehört, erlangt wird, einzustellen.

9. Vorrichtung (700) nach Anspruch 8, wobei das Steuerungsmodul (703) ferner zu Folgendem konfiguriert ist: Empfangen einer Anfrage zur Beanspruchung eines gemeinsamen Speichers, die durch einen ersten Dienstprozess initiiert wird und die auf einer zweiten gemeinsamen Speichergruppe basiert, wobei der erste Dienstprozess ein beliebiger aus der Vielzahl von Dienstprozessen ist und die zweite gemeinsame Speichergruppe eine beliebige aus der mindestens einen gemeinsamen Speichergruppe ist; Überprüfen, basierend auf einem Typ einer Zugriffsberechtigung eines jeden Dienstprozesses in der zweiten gemeinsamen Speichergruppe für einen gemeinsamen Speicher, der mittels Beanspruchung basierend auf der zweiten gemeinsamen Speichergruppe erlangt wird, ob der erste Dienstprozess eine Berechtigung hat, den gemeinsamen Speicher basierend auf der zweiten gemeinsamen Speichergruppe zu beanspruchen; wenn der erste Dienstprozess die Berechtigung hat, den gemeinsamen Speicher basierend auf der zweiten gemeinsamen Speichergruppe zu beanspruchen, Zuweisen von physischem Speicherplatz und virtuellem Speicherplatz an den ersten Dienstprozess; und Kopieren einer Zuordnungsbeziehung zwischen dem physischen Speicherplatz und dem virtuellen Speicherplatz in eine Seitentabelle, die zu jedem Dienstprozess in der zweiten gemeinsamen Speichergruppe gehört und die basierend auf der zweiten gemeinsamen Speichergruppe erlangt wird.

10. Vorrichtung (700) nach Anspruch 9, wobei das Steuerungsmodul (703) ferner dazu konfiguriert ist, basierend auf dem Typ der Zugriffsberechtigung eines jeden Dienstprozesses in der zweiten gemeinsamen Speichergruppe für den gemeinsamen Speicher, der mittels Beanspruchung basierend auf der zweiten gemeinsamen Speichergruppe erlangt wird, einen Typ einer Zugriffsberechtigung eines jeden Dienstprozesses in der zweiten gemeinsamen Speichergruppe für die Seitentabelle, die zu dem Dienstprozess gehört und die basierend auf der zweiten gemeinsamen Speichergruppe erlangt wird, einzustellen.

11. Vorrichtung (700) nach einem der Ansprüche 7 bis 10, wobei das Lesemodul (701) insbesondere zu Folgendem konfiguriert ist:
wenn die erste elektronische Einrichtung gestartet wird, Lesen eines Konfigurationsdatenpakets und einer ersten Signatur, die in der Speichereinrichtung in der ersten elektronischen Einrichtung vorab gespeichert sind, wobei das Konfigurationsdatenpaket die Verwaltungsberechtigungsliste und die Zugriffsberechtigungsliste umfasst; Überprüfen der Sicherheit des Konfigurationsdatenpakets basierend auf der ersten Signatur; und, wenn überprüft wurde, dass das Konfigurationsdatenpaket sicher ist, Erlangen der Verwaltungsberechtigungsliste und der Zugriffsberechtigungsliste von dem Konfigurationsdatenpaket.

12. Vorrichtung (700) nach Anspruch 10, wobei das Steuerungsmodul (703) ferner zu Folgendem konfiguriert ist: als Reaktion auf eine Zugriffsanfrage, die durch den ersten Dienstprozess initiiert wird und die auf der zweiten gemeinsamen Speichergruppe basiert, Überprüfen, basierend auf dem Typ der Zugriffsberechtigung eines jeden Dienstprozesses in der zweiten gemeinsamen Speichergruppe für die Seitentabelle, die zu dem Dienstprozess gehört und die basierend auf der zweiten gemeinsamen Speichergruppe erlangt wird, ob die Zugriffsanfrage gültig ist; und, wenn die Zugriffsanfrage gültig ist, Zugreifen, basierend auf der Zugriffsanfrage, auf eine Seitentabelle, die zu dem ersten Dienstprozess gehört und die basierend auf der zweiten gemeinsamen Speichergruppe erlangt wird.

13. Computerlesbares Speichermedium, umfassend ein Computerprogramm, wobei, wenn das Computerprogramm auf einem Prozessor ausgeführt wird, der Prozessor in die Lage versetzt wird, das Verfahren nach einem der Ansprüche 1 bis 6 durchzuführen.

14. Computerprogramm, wobei, wenn das Computerprogramm durch einen Computer oder einen Prozessor ausgeführt wird, der Computer oder der Prozessor in die Lage versetzt wird, das Verfahren nach einem der Ansprüche 1 bis 6 durchzuführen.

## Revendications

1. Procédé de gestion et de commande d'autorisation pour une mémoire partagée, dans lequel le procédé est appliqué à un premier dispositif électronique, et le procédé comprend :
la lecture d'une liste d'autorisations de gestion et d'une liste d'autorisations d'accès qui sont préenregistrées dans un stockage dans le premier dispositif électronique lorsque le premier dispositif électronique est démarré ;
la configuration, pour un processus de gestion sur la base de la liste d'autorisations de gestion, d'une autorisation de gérer au moins un groupe de mémoire partagée ; et
la commande du processus de gestion pour regrouper une pluralité de processus de service dans l'au moins un groupe de mémoire partagée sur la base de la liste d'autorisations d'accès, dans lequel
une pluralité de processus de service dans un premier groupe de mémoire partagée partagent une mémoire partagée qui est obtenue par le biais d'une application sur la base du premier groupe de mémoire partagée, et le premier groupe de mémoire partagée est l'un quelconque de l'au moins un groupe de mémoire partagée.

2. Procédé selon la revendication 1, dans lequel la liste d'autorisations d'accès indique également un type d'une autorisation d'accès de chaque processus de service dans la pluralité de processus de service pour un groupe de mémoire partagée auquel appartient le processus de service ; et
le procédé comprend également :
la commande du processus de gestion pour définir, sur la base du type de l'autorisation d'accès de chaque processus de service pour le groupe de mémoire partagée auquel le processus de service appartient indiqué par la liste d'autorisations d'accès, un type d'une autorisation d'accès de chaque processus de service pour une mémoire partagée qui est obtenue par le biais d'une application sur la base du groupe de mémoire partagée auquel le processus de service appartient.

3. Procédé selon la revendication 2, dans lequel le procédé comprend également :
la réception d'une demande d'application de mémoire partagée qui est initiée par un premier processus de service et qui est basée sur un second groupe de mémoire partagée, dans lequel le premier processus de service est l'un quelconque de la pluralité de processus de service, et le second groupe de mémoire partagée est l'un quelconque de l'au moins un groupe de mémoire partagée ;
le fait de vérifier, sur la base d'un type d'une autorisation d'accès de chaque processus de service dans le second groupe de mémoire partagée pour une mémoire partagée qui est obtenue par le biais d'une application sur la base du second groupe de mémoire partagée, si le premier processus de service a une autorisation de demander la mémoire partagée sur la base du second groupe de mémoire partagée ;
si le premier processus de service a l'autorisation de demander la mémoire partagée sur la base du second groupe de mémoire partagée, l'attribution de l'espace mémoire physique et de l'espace mémoire virtuelle au premier processus de service ; et
la copie d'une relation de mappage entre l'espace mémoire physique et l'espace mémoire virtuel dans une table de pages qui est de chaque processus de service dans le second groupe de mémoire partagée et qui est obtenue sur la base du second groupe de mémoire partagée.

4. Procédé selon la revendication 3, dans lequel le procédé comprend également :
la définition, sur la base du type de l'autorisation d'accès de chaque processus de service dans le second groupe de mémoire partagée pour la mémoire partagée qui est obtenue par le biais d'une application sur la base du second groupe de mémoire partagée, d'un type d'une autorisation d'accès de chaque processus de service dans le second groupe de mémoire partagée pour la table de pages qui est du processus de service et qui est obtenue sur la base du second groupe de mémoire partagée.

5. Procédé selon l'une quelconque des revendications 1 à 4, dans lequel la lecture d'une liste d'autorisations de gestion et d'une liste d'autorisations d'accès qui sont préenregistrées dans un stockage du premier dispositif électronique lorsque le premier dispositif électronique est démarré comprend :
lorsque le premier dispositif électronique est démarré, la lecture d'un paquet de données de configuration et d'une première signature qui sont préenregistrés dans le stockage du premier dispositif électronique, dans lequel le paquet de données de configuration comprend la liste d'autorisations de gestion et la liste d'autorisations d'accès ;
la vérification de la sécurité du paquet de données de configuration sur la base de la première signature ; et
s'il est vérifié que le paquet de données de configuration est sécurisé, l'obtention de la liste d'autorisations de gestion et de la liste d'autorisations d'accès à partir du paquet de données de configuration.

6. Procédé selon la revendication 4, dans lequel le procédé comprend également :
en réponse à une demande d'accès qui est initiée par le premier processus de service et qui est basée sur le second groupe de mémoire partagée, le fait de vérifier, sur la base du type de l'autorisation d'accès de chaque processus de service dans le second groupe de mémoire partagée pour la table de pages qui est du processus de service et qui est obtenue sur la base du second groupe de mémoire partagée, si la demande d'accès est valide ; et
si la demande d'accès est valide, l'accès, sur la base de la demande d'accès, à une table de pages qui est du premier processus de service et qui est obtenue sur la base du second groupe de mémoire partagée.

7. Appareil de gestion et de commande d'autorisation (700) pour une mémoire partagée, dans lequel l'appareil est utilisé dans un premier dispositif électronique, et l'appareil comprend :
un module de lecture (701), configuré pour : lorsque le premier dispositif électronique est démarré, lire une liste d'autorisations de gestion et une liste d'autorisations d'accès qui sont préenregistrées dans un stockage dans le premier dispositif électronique ;
un module de configuration (702), adapté pour configurer, pour un processus de gestion sur la base de la liste d'autorisations de gestion, une autorisation de gérer au moins un groupe de mémoire partagée ; et
un module de commande (703), configuré pour commander le processus de gestion pour regrouper une pluralité de processus de service dans l'au moins un groupe de mémoire partagée sur la base de la liste d'autorisations d'accès, dans lequel
une pluralité de processus de service dans un premier groupe de mémoire partagée partagent une mémoire partagée qui est obtenue par le biais d'une application sur la base du premier groupe de mémoire partagée, et le premier groupe de mémoire partagée est l'un quelconque de l'au moins un groupe de mémoire partagée.

8. Appareil (700) selon la revendication 7, dans lequel la liste d'autorisations d'accès indique également un type d'une autorisation d'accès de chaque processus de service dans la pluralité de processus de service pour un groupe de mémoire partagée auquel appartient le processus de service ; et
le module de commande (703) est également configuré pour commander le processus de gestion pour définir, sur la base du type de l'autorisation d'accès de chaque processus de service pour le groupe de mémoire partagée auquel le processus de service appartient indiqué par la liste d'autorisations d'accès, un type d'une autorisation d'accès de chaque processus de service pour une mémoire partagée qui est obtenue par le biais d'une application sur la base du groupe de mémoire partagée auquel le processus de service appartient.

9. Appareil (700) selon la revendication 8, dans lequel le module de commande (703) est également configuré pour : recevoir une demande d'application de mémoire partagée qui est initiée par un premier processus de service et qui est basée sur un second groupe de mémoire partagée, dans lequel le premier processus de service est l'un quelconque de la pluralité de processus de service, et le second groupe de mémoire partagée est l'un quelconque de l'au moins un groupe de mémoire partagée ; vérifier, sur la base d'un type d'une autorisation d'accès de chaque processus de service dans le second groupe de mémoire partagée pour une mémoire partagée qui est obtenue par le biais d'une application sur la base du second groupe de mémoire partagée, si le premier processus de service a une autorisation de demander la mémoire partagée sur la base du second groupe de mémoire partagée ; si le premier processus de service a l'autorisation de demander la mémoire partagée sur la base du second groupe de mémoire partagée, attribuer l'espace mémoire physique et l'espace mémoire virtuelle au premier processus de service ; et copier une relation de mappage entre l'espace mémoire physique et l'espace mémoire virtuel dans une table de pages qui est de chaque processus de service dans le second groupe de mémoire partagée et qui est obtenue sur la base du second groupe de mémoire partagée.

10. Appareil (700) selon la revendication 9, dans lequel le module de commande (703) est également configuré pour définir, sur la base du type de l'autorisation d'accès de chaque processus de service dans le second groupe de mémoire partagée pour la mémoire partagée qui est obtenue par le biais d'une application sur la base du second groupe de mémoire partagée, un type d'une autorisation d'accès de chaque processus de service dans le second groupe de mémoire partagée pour la table de pages qui est du processus de service et qui est obtenue sur la base du second groupe de mémoire partagée.

11. Appareil (700) selon l'une quelconque des revendications 7 à 10, dans lequel le module de lecture (701) est spécifiquement configuré pour : lorsque le premier dispositif électronique est démarré, lire un paquet de données de configuration et une première signature qui sont préenregistrés dans le stockage du premier dispositif électronique, dans lequel le paquet de données de configuration comprend la liste d'autorisations de gestion et la liste d'autorisations d'accès ; vérifier la sécurité du paquet de données de configuration sur la base de la première signature ; et s'il est vérifié que le paquet de données de configuration est sécurisé, obtenir la liste d'autorisations de gestion et la liste d'autorisations d'accès à partir du paquet de données de configuration.

12. Appareil (700) selon la revendication 10, dans lequel le module de commande (703) est également configuré pour : en réponse à une demande d'accès qui est initiée par le premier processus de service et qui est basée sur le second groupe de mémoire partagée, vérifier, sur la base du type de l'autorisation d'accès de chaque processus de service dans le second groupe de mémoire partagée pour la table de pages qui est du processus de service et qui est obtenue sur la base du second groupe de mémoire partagée, si la demande d'accès est valide ; et si la demande d'accès est valide, accéder, sur la base de la demande d'accès, à une table de pages qui est du premier processus de service et qui est obtenue sur la base du second groupe de mémoire partagée.

13. Support de stockage lisible par ordinateur, comprenant un programme informatique, dans lequel lorsque le programme informatique est exécuté sur un processeur, le processeur est activé pour réaliser le procédé selon l'une quelconque des revendications 1 à 6.

14. Programme informatique, dans lequel lorsque le programme informatique est exécuté par un ordinateur ou un processeur, l'ordinateur ou le processeur est activé pour réaliser le procédé selon l'une quelconque des revendications 1 à 6.
